# EUROPEAN PATENT SPECIFICATION

(11) **EP 3 127 775 B1**
(45) Date of publication and mention of the grant of the patent: **02.10.2019**
(21) Application number: 15180201.4
(22) Date of filing: 07.08.2015
(51) Int. Cl.: B62B 7/10

(54) **CART**
WAGEN
CHARIOT

(43) Date of publication of application: 08.02.2017
(73) Proprietor: E.H.B. Consulting GmbH, 1090 Vienna (AT); Unique Product & Design Co., Ltd., Tainan City (TW)
(72) Inventor: REITER, Thomas, 1090 Vienna (AT); LIAO, Gordon, Tainan City, Taiwan (TW); SHAPIRO, Richard N., Virginia Beach Virginia 23454 (US)
(74) Representative: Sonn & Partner Patentanwälte

(56) References cited:
- WO-A1-2007/025551
- CN-A- 103 448 778
- DE-U1-202005 019 055
- FR-A1- 2 323 563
- FR-A1- 2 926 521
- GB-A- 639 439

## Description

The present invention relates to a cart, in particular a baby stroller, with the features of the preamble of claim 1.

In the prior art, a great variety of manually operated carts have been proposed. Such carts are disclosed in FR 2 926 521 A1, DE 20 2005 019055 U1, GB 639 439, WO 2007/025551 A1, CN 103 448 778 and FR 2 323 563.

For example, a perambulator has been described in WO 2007/025551A1. The known perambulator comprises a chassis unit with a rectangular bottom frame. The bottom frame comprises two parallel lateral profiles that are connected to end profiles by means of hinge fittings. A carrier frame for a cot is mounted on the chassis unit. The carrier frame comprises lateral legs connected to the hinge fittings of the bottom frame. When the legs of the carrier frame are turned clockwise about the hinge fittings, the lateral profiles of the bottom frame are rotated using wires, whereby the wheels mounted on the lateral profiles are able to turn by 90 degrees. In this way, the wheels are folded inwards to lie underneath the collapsed perambulator.

The known construction entails the drawback that the folding of the wheels is coupled to the collapsing of the carrier frame. Thus, the wheels may only be arranged flat on the underside of the perambulator if the carrier frame is collapsed onto the bottom frame. It is a further drawback of the known that the folding of the wheels in is rather complicated and requires significant hand force.

The object of the present invention is to alleviate at least some of the drawbacks of the prior art. It is thus an object of the invention to provide a cart as mentioned initially with a simple, reliable folding mechanism that gives a high degree of flexibility to the user of the cart.

The cart of the present invention has the features of claim 1.

Thus, the invention provides for a manually manipulable operating handle which is separate from the carrier frame for the carrying element. The operating handle does not constitute an element of the carrier frame or carrying element movable between the carrying and the collapsed state. In this way, the folding mechanism may be activated independently of the collapsing mechanism or carrying element. Thus, the front and back wheels may be arranged in either of the drive position or stow position using the operating handle, while the carrier frame may be positioned in either of the carrying or collapsed position (or any intermediary position between the carrying and the collapsed position). Furthermore, the operating handle is separate from the at least two back wheels and the at least one front wheel. This construction facilitates actuation of the cart. Also, the user does not need to touch soiled wheels for operating the folding mechanism. In particular, the front and back wheels may be folded inwards from the drive position to lie flat on the underside of the bottom frame, whereas the carrier frame is retained in the carrying position. Alternatively, the folding or unfolding of the front and back wheels may be effected in the collapsed position of the carrier frame. In the present invention, the front and back wheels may be folded or unfolded simultaneously, with a single actuation of the operating handle. Preferably, the back wheels pivot by an angle of approximately 90 degrees between the drive and stow position about axes essentially parallel to a longitudinal axis of the cart (which is the direction of a straight movement of the cart in the drive position). The at least on front wheel preferably undergoes a two-stage folding process starting from the drive position. First, the at least one front wheel is pivoted into an intermediary position in which the at least one front wheel is arranged essentially perpendicularly to the longitudinal axis of the cart. Second, the at least one front wheel is pivoted about a transverse axis, which is essentially perpendicular to the longitudinal axis of the cart, into the stow position. In the carrying position, a carrying element, for example a child seat or cot, may be arranged on the carrier frame. Preferably, the mounting of the carrying element on the carrier frame is releasable such that the carrying element may be simply removed prior to collapsing the carrier frame. In the collapsed position, the carrier frame may lie flat on the upper side of the bottom or chassis frame of the cart. The at least two back wheels and the at least one front wheel are arranged essentially in parallel to a main plane of the bottom frame in the stow position. Thus, the at least one front wheel and at least two back wheels in the stow position lie flat below the underside of the bottom frame. This construction entails maximum flexibility and adaptability. The operating handle is particularly simple to use. Furthermore, the operating handle may be specifically designed to manipulate the folding mechanism, whereas the operating handle does need not contribute to the support of the carrying element. As a result, a particularly durable construction may be achieved.

In a particularly preferred embodiment, the operating handle is a push-and-pull handle being linearly movable, preferably in a main plane of the bottom frame. In this embodiment, a user may pull the push-and-pull handle to simultaneously transfer the front and back wheels into the stow position, in which the front and back wheels lie flat at the underside of the bottom frame. In the same fashion, the user may push the push-and-pull handle to unfold the back and front wheels into the drive position, in which the back and front wheels may roll on a plain ground. The push-and-pull handle is particularly easy to operate, may be easily integrated into the construction of the cart, takes little space and enables powerful force transmission. Preferably, the push-and-pull handle may be moved along a linear path in the main plane of the bottom frame, in particular in an essentially horizontal plane with respect to the drive position with the back and front wheels supported on the floor.

In a less preferred embodiment, the operating handle is a lever pivotable about an axis to transfer the at least two back wheels and the at least one front wheel from the drive position into the stow position.

For folding and unfolding the back and front wheels through actuation of the operating handle, it is preferred if the folding mechanism comprises a force transmitting device connected to the operating handle and the at least two back wheels, respectively, the force transmitting device preferably comprising tie rods. The force transmitting device is arranged for transmitting the force applied by the user on the operating handle to the back wheels to simultaneously fold and unfold the back wheels. Preferably, the force transmitting device comprises rigid tie rods, which are movable along linear paths to pivot the back wheels. By using tie rods, both the folding and unfolding of the back wheels may be accomplished if needed.

In a particularly preferred embodiment, the folding mechanism comprises sleeve elements connected to the at least two back wheels, the sleeve elements having first guide rails for sliding elements connected to the tie rods for converting an actuation of the operating handle into a swiveling motion of the at least two back wheels. The sleeve elements may be rigidly connected to bearings of the back wheels. Preferably, rear ends of the tie rods are inserted into the sleeve elements. In operation, the sliding elements on the tie rods slide along the first guide rails of the sleeve elements. The first guide rails are arranged such that the linear movements of the tie rods carrying the sliding elements are converted into swiveling motions of the back wheels. Preferably, the back wheels are pivoted by an angle of approximately 90° between the drive position and the stow position.

For simulataneously folding and unfolding the back wheels it is preferred if the push-and-pull handle is mounted on a transverse rod extending essentially perpendicularly to the direction of the pushing or pulling of the push-and-pull handle. In this way, a movement of the push-and-pull handle along the longitudinal axis of the cart may be transferred to the two tie rods connected to the two back wheels.

In view of folding or unfolding the at least one front wheel simultaneously with folding or unfolding the at least two back wheels, the folding mechanism comprises an intermediary member arranged between the operating handle and the at least one front wheel, the intermediary member preferably having a second guide rail for guiding a slider connected to the operating handle for converting an actuation of the operating handle into a swiveling motion of the at least one front wheel. Preferably, the slider is the transverse rod on which the operating handle is mounted. The operating handle may have an opening for accomodating the intermediary member.

For facilitating the actuation of the folding mechanism, the push-and-pull handle preferably comprises a handhold member and a mounting member mounted on the bottom frame, the handhold member being pivotably mounted on the mounting element. While the mounting member may be linearly moved in the longitudinal direction of the cart during folding or unfolding the back and front wheels, the handhold member may be pivoted about an axis, which preferably extends essentially perpendicularly to the linear movement of the mounting element.

For obtaining a stable but light-weight construction it is advantageous if the bottom frame comprises two lateral frame members and two transverse frame members connecting the two lateral frame members. Preferably, the lateral frame members and the transverse frame members are formed by hollow profile elements. In this way, elements of the force transmitting device between the operating handle and the wheels, in particular the tie rods mentioned before, may be housed inside the profile elements of the bottom frame.

For easy operation of the folding mechanism, it is preferred if the operating handle is arranged at a front end of the bottom frame, preferably between two front wheels.

In a particularly advantageous embodiment, the carrier frame comprises a circumferential frame element and at least one support frame element, the at least one support frame element in the carrying position supporting the circumferential frame element from below, the circumferential frame element and the at least one support frame element preferably being arranged essentially in parallel to a main plane of the bottom frame in the collapsed position of the carrier frame. Preferably, two support frame elements are mounted on two lateral frame members of the bottom frame, each support frame element supporting a lateral section of the circumferential frame element. Preferably, the circumferential frame element, in the carrying position, is oval or rectangular in top view.

The collapsing mechanism preferably comprises a first hinge between a first and a second frame part of the circumferential frame element and/or a second hinge between a first and a second portion of the support frame element. For collapsing the carrier frame, the first and second frame part of the circumferential frame element may be pivoted against each other by means of the first hinge. Preferably, in the carrying position, the first and second frame part of the circumferential frame element extend in the same plane, which preferably is inclined with respect to the main plane of the bottom frame (i.e. a horizontal plane when viewed in the drive position on the ground). In a similar fashion, the first and second portion of the support frame element may be pivoted against each other by means of the second hinge. Preferably, the first portion of the support frame element extends the second portion of the support frame element in the carrying position. In the collapsed position, the first portion and the second portion of the support frame element are folded onto each other.

For actuating the folding mechanism without the need to overcome the friction between the wheels and the floor, a preferred embodiment provides for at least one foot element mounted on the bottom frame, in particular on a rear transverse frame member of the bottom frame, for retaining the cart in an upright position supported by the at least one foot element. Preferably, the cart is retained in the upright position solely by the foot elements, independently of the front or back wheels which are lifted off the ground. In the upright position, the folding mechanism may be actuated such that the front and back wheels freely fold into the stow position or unfold into the drive position.

Preferred embodiments of the invention are further explained with respect to the drawings, without limiting the invention thereto. In the drawings
Fig. 1 is a perspective view of a baby stroller according to the invention, having a bottom frame with front and back wheels, a carrier frame and a child seat mounted to the carrier frame;
Fig. 2 is a perspective view of the baby stroller of Fig. 1, yet without the child seat;
Fig. 3 is a perspective view of the baby stroller of Figs. 1, 2 during collapsing of the carrier frame;
Fig. 4 is a perspective view of the baby stroller of Figs. 1 to 3 in the collapsed position of the carrier frame;
Fig. 5 is a perspective view of a further baby stroller according to the invention in an upright position supported by foot elements mounted on the bottom frame;
Fig. 6 is a perspective view of the baby stroller of Fig. 5 with the front wheels pivoted by 90° into an intermediary position for preparation of the folding of the front wheels;
Fig. 7 is a perspective view of the baby stroller of Figs. 5, 6 with the front wheels and the back wheels folded into a flat stow position below the bottom frame;
Figs. 8a to 8d are perspective views of the folding mechanism for folding the back and front wheels
Fig. 9 is an exploded view of the folding mechanism of Fig. 8a to 8d;
Figs. 10a to 10c are detail views of elements of the folding mechanism of Figs. 8 and 9; and
Figs. 11a to 11c are sectional views of elements of the folding mechanism of Figs. 8 to 10.

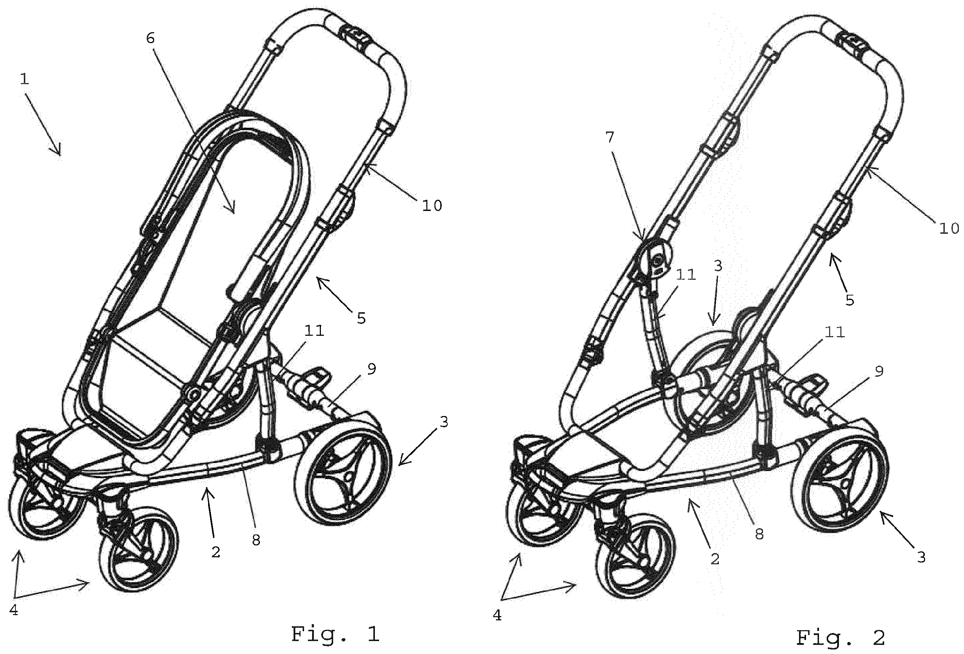

Figs. 1 to 7 show a manually operable wagon or cart 1, which, in the shown embodiment, is a baby stroller. With certain modifications readily comprehensible to the person skilled in the art, cart 1 could also be a golf cart or the like.

As can be seen from Figs. 1 and 2, cart 1 comprises a bottom frame 2. Two back wheels 3 and two front wheels 4 are mounted to the bottom frame 2. Cart 1 could also only have one front wheel 4. A carrier frame 5 is mounted to the bottom frame 2. A carrier element, in the present embodiment a child seat 6, is releasably attached to carrier frame 5. Fig. 1 shows cart 1 with attached child seat 6. In Fig. 2, child seat 6 was detached from child seat mounts 7. In the shown drive position of cart 1 supported on the ground, front wheels 2 may pivot about a vertical axis for steering cart 1, as is known in the prior art.

As can be seen from Figs. 1 and 2, the bottom frame 2 comprises two lateral frame members 8 and two transverse frame members 9 connecting the two lateral frame members 8. In the shown drive position, lateral frame members 8 and transverse frame members 9 are arranged in a horizontal plane parallel to the ground on which back wheels 3 and front wheels 4 are supported. The carrier frame 5 comprises a circumferential frame element 10 and two support frame elements 11, the two support frame elements 11 supporting the circumferential frame element 10 from the underside thereof.

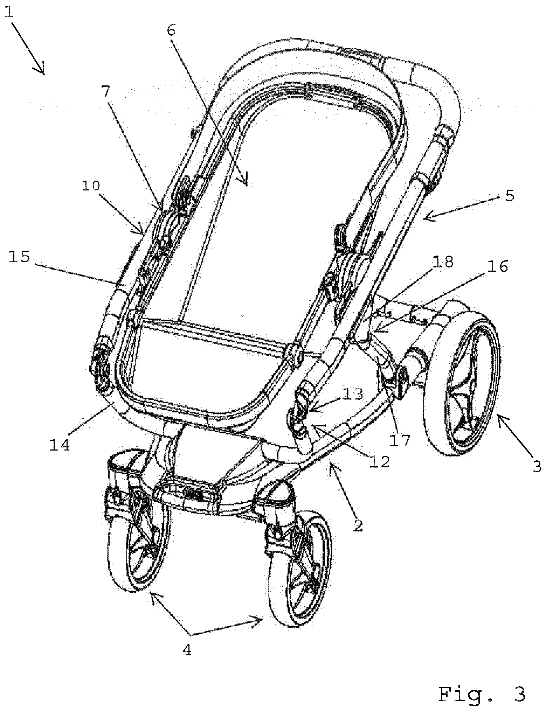

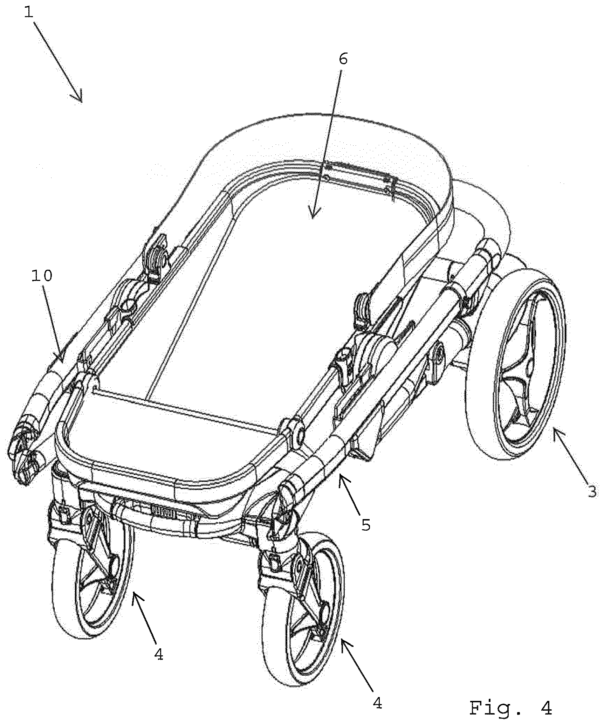

As can be seen from Figs. 3 and 4, cart 1 comprises a collapsing mechanism 12, which is arranged for transferring the carrier frame 5 from a carrying position (see Figs. 1 and 2) into a collapsed position (see Fig. 4) through a series of partly collapsed positions (see Fig. 3). The collapsing mechanism 12 comprises a first hinge 13 between a first 14 and a second frame part 15 of the circumferential frame element 10. The collapsing mechanism 12 further comprises a second hinge 16 between a first 17 and a second portion 18 of each support frame element 11. The circumferential frame element 10 and the support frame elements 11 are arranged essentially in parallel to a main plane of the bottom frame in the collapsed position of the carrier frame 5.

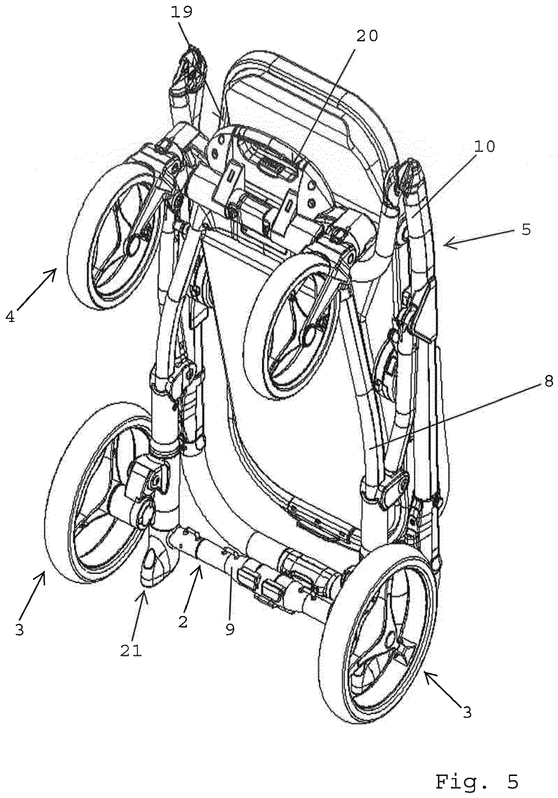

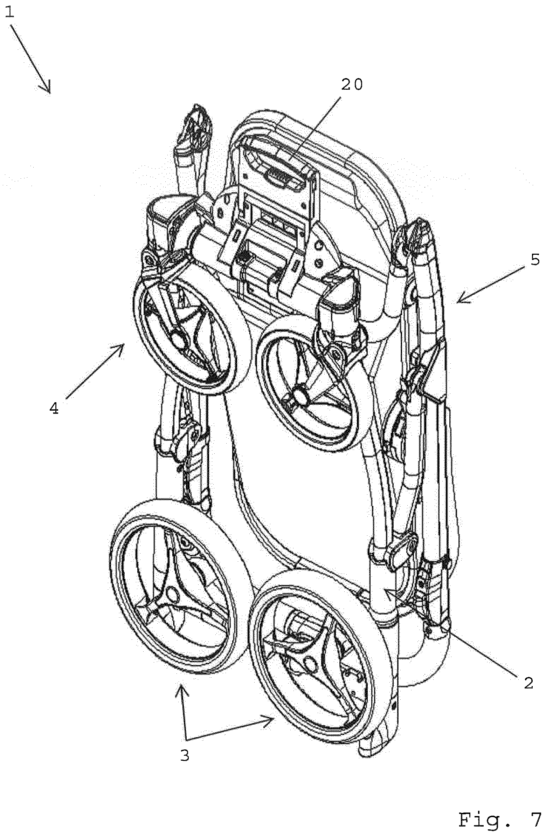

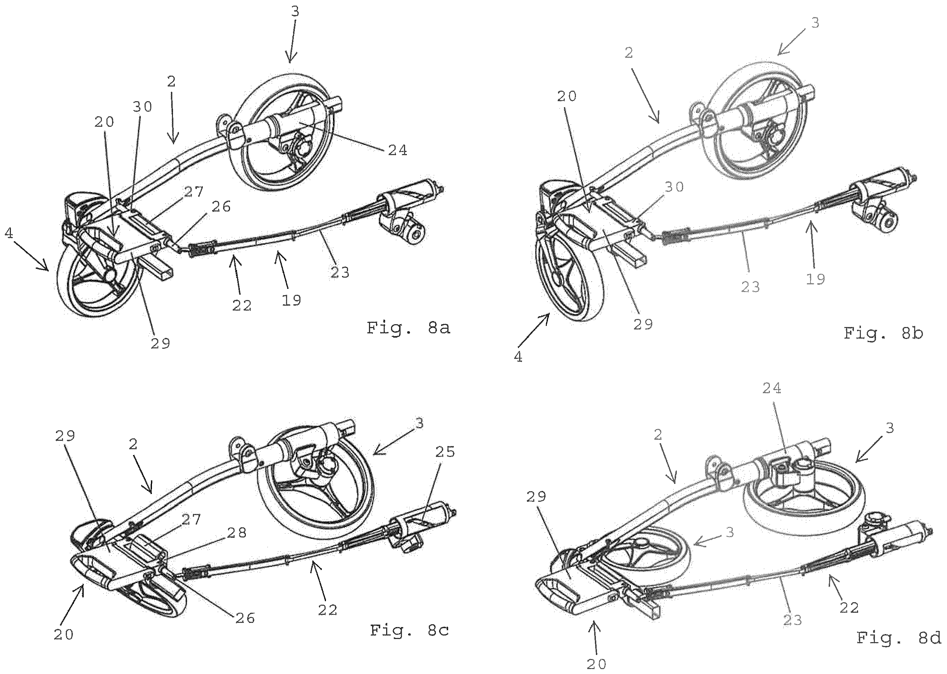

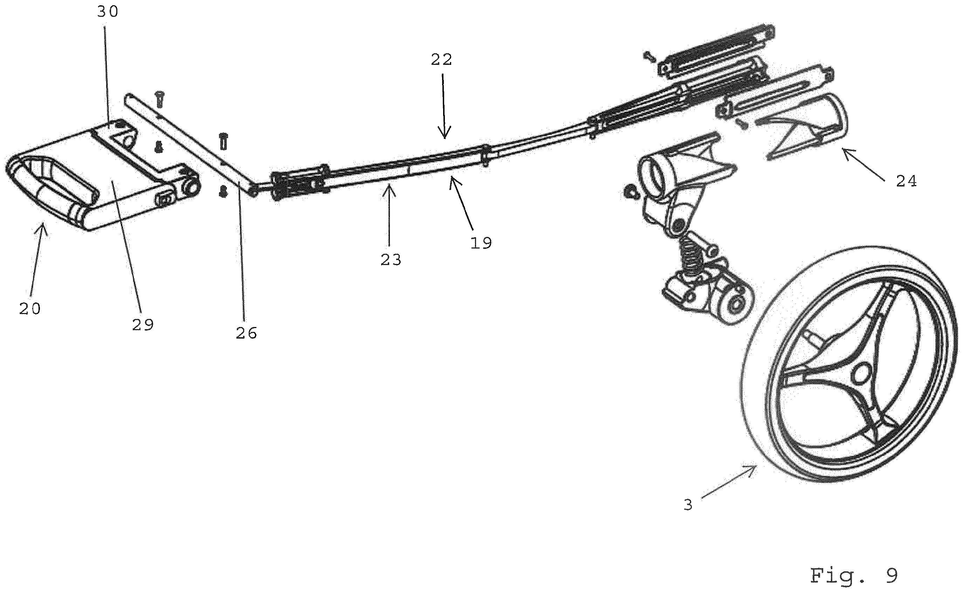

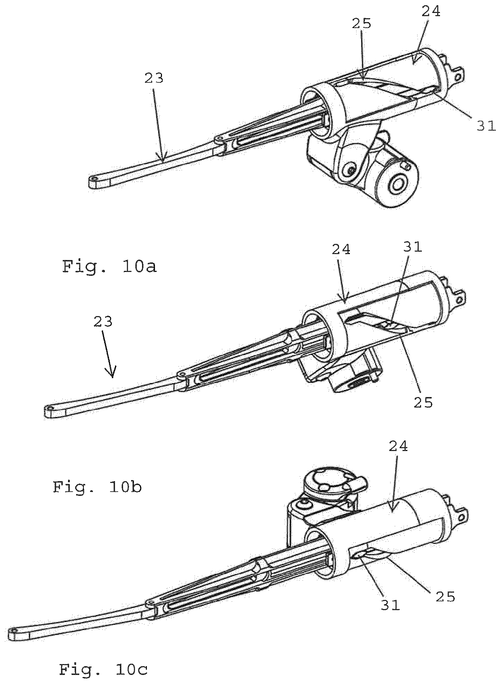

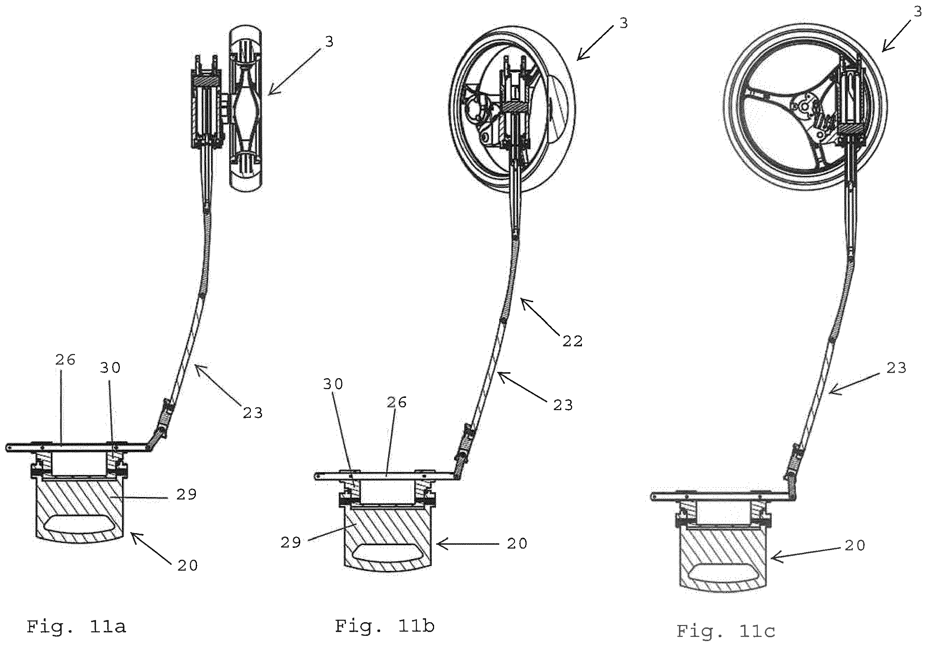

As can be seen from Figs. 5 to 7, in greater detail from Figs. 8 to 11, cart 1 further comprises a folding mechanism 19 for folding the two back wheels 3 and the two front wheels 4 simultaneously from the drive position shown in Figs. 1 to 4 into a stow position shown in Fig. 7. Folding mechanism or device 19 comprises an operating handle 20 separate from the carrier frame 5 such that the two back wheels 3 and the two front wheels 4 may be folded into the stow position independently of the collapsing mechanism 12 for bringing the carrier frame 5 into the collapsed position. The operating handle 20 is arranged at a front end of the bottom frame 2, between two front wheels 4.

According to Fig. 5, cart 1 is arranged in an upright position, in which front wheels 4 and back wheels 3 are lifted off a level ground. For supporting cart 1 in the upright position, two foot elements 21 are arranged on the rear transverse frame member 9. The foot elements 21 may be extensions of lateral frame members 8. In this position, front wheels 4 and back wheels 3 may be arranged in parallel to each other.

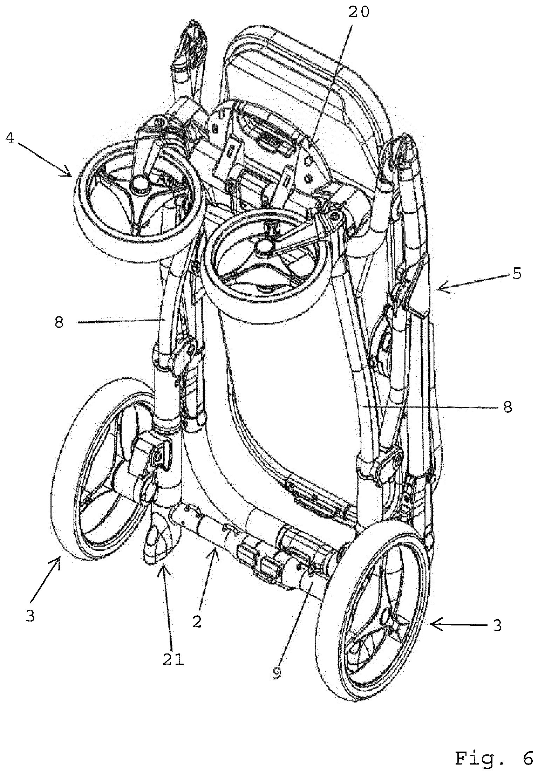

According to Fig. 6, front wheels 4 are pivoted into an intermediate folding position about an axis essentially perpendicular to the bottom frame 2(i.e. a vertical axis with respect to the drive position on the ground as shown in Figs. 1, 2). In the intermediate folding position, front wheels 4 are arranged essentially perpendicularly to back wheels 3.

According to Fig. 7, front wheels 4 are pivoted about transverse axes perpendicular to the longitudinal axis of cart 1 by approximately 90°. At the same time, back wheels 3 are pivoted about axes essentially parallel to the longitudinal axis of cart 1 by approximately 90°. In this way, front wheels 4 and back wheels 3 are arranged in the stow position shown in Fig. 7, in which front wheels 4 and back wheels 3 lie flat at the underside of bottom frame 2.

As can be seen from Figs. 8 to 11, the operating handle 20 is a push-and-pull handle being linearly movable along the main plane of the bottom frame 2. The folding mechanism 19 comprises a force transmitting device 22 housed inside the bottom frame 2. In the shown embodiment, force transmitting device 22 comprises one tie rod 23 in each lateral frame member 8 of bottom frame 2. The tie rods 23 are multi-part in the shown embodiment. The opposite ends of tie rods 23 are connected to the operating handle 20 and back wheels 3, respectively. The folding mechanism 19 further comprises one sleeve element 24 around each lateral frame member 8. The sleeve elements 24 are connected to back wheels 3. Each sleeve element 24 has a guide rail 25 with sections inclined to the direction of the linear movement of tie rods 23. Sliding elements 31 are rigidly connected to ends of tie rods 23 and slide along first guide rails 25 of sleeve elements 24. In this way, an actuation of the operating handle 20 is transferred into the swiveling or pivoting motion of the two back wheels 3 into the stow position.

As can be seen from Figs. 8 to 11, the push-and-pull operating handle 20 is mounted on a transverse rod 26 extending perpendicularly to the direction of the pushing or pulling of the push-and-pull operating handle 20. The folding mechanism 19 further comprises an intermediary member 27 arranged between the operating handle 20 and the front wheel 4 (see Fig. 8a to 8d). The intermediary member 27 has a second guide rail 28 which accomodates a slider formed by transverse rod 26. In this way, an actuation of the operating handle 20 is transferred into a swiveling or pivoting motion of the front wheel 4 into the stow position.

As can be seen particularly from Figs. 8a to 8d, the push-and-pull operating handle 20 comprises a handhold member 29 and a mounting member 30 mounted on the transverse rod 26 of bottom frame 2. The handhold member 29 is pivotably mounted on the mounting element 30.

## Claims

1. A cart (1), in particular a baby stroller, comprising a bottom frame (2), at least two back wheels (3) and at least one front wheel (4) mounted to the bottom frame (2), a carrier frame (5) mounted to the bottom frame (2), the carrier frame (5) being arranged for carrying a carrier element, in particular a child seat (6), a collapsing mechanism (12) for bringing the carrier frame (5) from a carrying position into a collapsed position and a folding mechanism (19) for folding the at least two back wheels (3) and the at least one front wheel (4) from a drive position into a stow position, wherein the folding mechanism (19) comprises an operating handle (20) separate from the carrier frame (5) such that the at least two back wheels (3) and the at least one front wheel (4) may be folded into the stow position independently of the collapsing mechanism (12) for bringing the carrier frame (5) into the collapsed position, wherein the at least two back wheels (3) and the at least one front wheel (4) are arranged essentially in parallel to a main plane of the bottom frame (2) in the stow position, **characterized in that** the at least one front wheel (4) and at least two back wheels (3) in the stow position lie flat below the underside of the bottom frame (2).

2. A cart (1) according to claim 1, **characterized in that** the operating handle (20) is a push-and-pull handle being linearly movable, preferably in a main plane of the bottom frame (2).

3. A cart (1) according to claim 1 or 2, **characterized in that** the folding mechanism (19) comprises a force transmitting device (22) connected to the operating handle (20) and the at least two back wheels (3), respectively, the force transmitting device (22) preferably comprising tie rods (23).

4. A cart (1) according to claim 3, **characterized in that** the folding mechanism (19) comprises sleeve elements (24) connected to the at least two back wheels (3), the sleeve elements (24) having first guide rails (25) for sliding elements (31) connected to the tie rods (23) for converting an actuation of the operating handle (20) into a swiveling motion of the at least two back wheels (3).

5. A cart (1) according to any of claims 2 to 4, **characterized in that** the push-and-pull handle is mounted on a transverse rod (26) extending essentially perpendicularly to the direction of the pushing or pulling of the push-and-pull handle.

6. A cart (1) according to any of claims 1 to 5, **characterized in that** the folding mechanism (19) comprises an intermediary member (27) arranged between the operating handle (20) and the at least one front wheel (4), the intermediary member (27) preferably having a second guide rail (28) for guiding a slider connected to the operating handle (20) for converting an actuation of the operating handle (20) into a swiveling motion of the at least one front wheel (4).

7. A cart (1) according to any of claims 2 to 6, **characterized in that** the push-and-pull handle comprises a handhold member (29) and a mounting member (30) mounted on the bottom frame (2), the handhold member (29) being pivotably mounted on the mounting element (30).

8. A cart (1) according to any of claims 1 to 7, **characterized in that** the bottom frame (2) comprises two lateral frame members (8) and two transverse frame members (9) connecting the two lateral frame members (8).

9. A cart (1) according to any of claims 1 to 8, **characterized in that** the operating handle (20) is arranged at a front end of the bottom frame (2), preferably between two front wheels (4).

10. A cart (1) according to any of claims 1 to 9, **characterized in that** the carrier frame (5) comprises a circumferential frame element (10) and at least one support frame element (11), the at least one support frame element (11) in the carrying position supporting the circumferential frame element (10) from below, the circumferential frame element (10) and the at least one support frame element (11) preferably being arranged essentially in parallel to a main plane of the bottom frame (2) in the collapsed position of the carrier frame (5).

11. A cart (1) of claim 10, **characterized in that** the collapsing mechanism (12) comprises a first hinge (13) between a first (14) and a second frame part (15) of the circumferential frame element (10) and/or a second hinge (16) between a first (17) and a second portion (18) of the support frame element (11).

12. A cart (1) according to any of claims 1 to 11, **characterized in that** the at least two back wheels (3) and the at least one front wheel (4) are arranged essentially in parallel to a main plane of the bottom frame (2) in the stow position.

13. A cart (1) according to any of claims 1 to 12, **characterized in that** at least one foot element (21) mounted on the bottom frame (2), in particular on a rear transverse frame member (9) of the bottom frame (2), for retaining the cart (1) in an upright position supported by the at least one foot element (22).

## Patentansprüche

1. Wagen (1), insbesondere Kinderwagen, der einen unteren Rahmen (2) aufweist, wenigstens zwei Hinterräder (3) und wenigstens ein Vorderrad (4), das an dem unteren Rahmen (2) angebracht ist, einen Tragrahmen (5), der an dem unteren Rahmen (2) angebracht ist, wobei der Tragrahmen (5) dazu angeordnet ist, ein Tragelement zu tragen, insbesondere einen Kindersitz (6), einen Zusammenlegemechanismus (12), um den Tragrahmen (5) von einer Tragposition in eine zusammengelegte Position zu bringen, und einen Faltmechanismus (19), um die wenigstens zwei Hinterräder (3) und das wenigstens eine Vorderrad (4) von einer Fahrposition in eine Verstauposition zu bringen, wobei der Faltmechanismus (19) einen Bediengriff (20) getrennt von dem Tragrahmen (5) aufweist, so dass die wenigstens zwei Hinterräder (3) und das wenigstens eine Vorderrad (4) unabhängig von dem Zusammenlegemechanismus (12), um den Tragrahmen (5) in die zusammengelegte Position zu bringen, in die Verstauposition gefaltet werden können, wobei die wenigstens zwei Hinterräder (3) und das wenigstens eine Vorderrad (4) im Wesentlichen parallel zu einer Hauptebene des unteren Rahmens (2) in der Verstauposition angeordnet sind, **dadurch gekennzeichnet, dass** das wenigstens eine Vorderrad (4) und die wenigstens zwei Hinterräder (3) in der Verstauposition flach unter der Unterseite des unteren Rahmens (2) liegen.

2. Wagen (1) nach Anspruch 1, **dadurch gekennzeichnet, dass** der Bediengriff (20) ein Druck-Zug-Griff ist, der linear beweglich ist, bevorzugt in einer Hauptebene des unteren Rahmens (2).

3. Wagen (1) nach Anspruch 1 oder 2, **dadurch gekennzeichnet, dass** der Faltmechanismus (19) eine Kraftübertragungsvorrichtung (22) aufweist, die mit dem Bediengriff (20) und den wenigstens zwei Hinterrädern (3) verbunden ist, wobei die Kraftübertragungsvorrichtung (22) bevorzugt Zugstangen (23) aufweist.

4. Wagen (1) nach Anspruch 3, **dadurch gekennzeichnet, dass** der Faltmechanismus (19) Hülsenelemente (24) aufweist, die mit den wenigstens zwei Hinterrädern (3) verbunden sind, wobei die Hülsenelemente (24) erste Führungsschienen (25) für Gleitelemente (31) aufweisen, die mit den Zugstangen (23) verbunden sind, um eine Betätigung des Bediengriffs (20) in eine Schwenkbewegung der wenigstens zwei Hinterräder (3) umzuwandeln.

5. Wagen (1) nach einem der Ansprüche 2 bis 4, **dadurch gekennzeichnet, dass** der Druck-Zug-Griff an einer Querstange (26) angebracht ist, die sich im Wesentlichen senkrecht zu der Druck- oder Zugrichtung des Druck-Zug-Griffs erstreckt.

6. Wagen (1) nach einem der Ansprüche 1 bis 5, **dadurch gekennzeichnet, dass** der Faltmechanismus (19) ein Zwischenteil (27) aufweist, das zwischen dem Bediengriff (20) und dem wenigstens einen Vorderrad (4) angeordnet ist, wobei das Zwischenteil (27) bevorzugt eine zweite Führungsschiene (28) zum Führen eines Schiebers, der mit dem Bediengriff (20) verbunden ist, aufweist, um eine Betätigung des Bediengriffs (20) in eine Schwenkbewegung des wenigstens einen Vorderrads (4) umzuwandeln.

7. Wagen (1) nach einem der Ansprüche 2 bis 6, **dadurch gekennzeichnet, dass** der Druck-Zug-Griff ein Griffteil (29) und ein Befestigungsteil (30) aufweist, das an dem unteren Rahmen (2) angebracht ist, wobei das Griffteil (29) schwenkbar an dem Befestigungsteil (30) angebracht ist.

8. Wagen (1) nach einem der Ansprüche 1 bis 7, **dadurch gekennzeichnet, dass** der untere Rahmen (2) zwei seitliche Rahmenteile (8) und zwei quer verlaufende Rahmenteile (9) aufweist, die die zwei seitlichen Rahmenteile (8) verbinden.

9. Wagen (1) nach einem der Ansprüche 1 bis 8, **dadurch gekennzeichnet, dass** der Bediengriff (20) an einem Vorderende des unteren Rahmens (2) angebracht ist, bevorzugt zwischen zwei Vorderrädern (4).

10. Wagen (1) nach einem der Ansprüche 1 bis 9, **dadurch gekennzeichnet, dass** der Tragrahmen (5) ein umlaufendes Rahmenteil (10) und wenigstens ein Tragrahmenteil (11) aufweist, wobei das wenigstens eine Tragrahmenteil (11) in der Tragposition das umlaufende Rahmenteil (10) von unten trägt, wobei das umlaufende Rahmenteil (10) und das wenigstens eine Tragrahmenteil (11) in der zusammengelegten Position des Tragrahmens (5) bevorzugt im Wesentlichen parallel zu einer Hauptebene des unteren Rahmens (2) angeordnet sind.

11. Wagen (1) nach Anspruch 10, **dadurch gekennzeichnet, dass** der Zusammenlegemechanismus (12) ein erstes Gelenk (13) zwischen einem ersten (14) und einem zweiten Rahmenteil (15) des umlaufenden Rahmenteils (10) und/oder ein zweites Gelenk (16) zwischen einem ersten (17) und einem zweiten Abschnitt (18) des Tragrahmenteils (11) aufweist.

12. Wagen (1) nach einem der Ansprüche 1 bis 11, **dadurch gekennzeichnet, dass** die wenigstens zwei Hinterräder (3) und das wenigstens eine Vorderrad (4) in der Verstauposition im Wesentlichen parallel zu einer Hauptebene des unteren Rahmens (2) angeordnet sind.

13. Wagen (1) nach einem der Ansprüche 1 bis 12, **dadurch gekennzeichnet, dass** wenigstens ein Fußteil (21) an dem unteren Rahmen (2) angebracht ist, insbesondere an einem hinteren quer verlaufenden Rahmenteil (9) des unteren Rahmens (2), um den Wagen (1) in einer aufrechten, von dem wenigstens einen Fußelement (22) gestützten Position zu halten.

## Revendications

1. Chariot (1) en particulier une poussette pour enfant, comprenant un bâti inférieur (2), au moins deux roues arrière (3) et au moins une roue avant (4) montée sur le bâti inférieur (2), un bâti de support (5) monté sur le bâti inférieur (2), le bâti de support (5) étant agencé pour porter un élément de support, en particulier un siège pour enfant (6), un mécanisme de repliage (12) pour amener le bâti de support (5) d'une position de support à une position repliée et un mécanisme de pliage (19) pour plier les au moins deux roues arrière (3) et l'au moins une roue avant (4) d'une position d'entraînement à une position rangée, dans lequel le mécanisme de pliage (19) comprend une poignée de commande (20) séparée du bâti de support (5) de sorte que les au moins deux roues arrière (3) et l'au moins une roue avant (4) peuvent être pliées dans la position rangée indépendamment du mécanisme de repliage (12) pour amener le bâti de support (5) dans la position repliée, dans lequel les au moins deux roues arrière (3) et l'au moins une roue avant (4) sont agencées essentiellement parallèlement à un plan principal du bâti inférieur (2) dans la position rangée, **caractérisé en ce que** l'au moins une roue avant (4) et les au moins deux roues arrière (3) dans la position rangée sont à plat au-dessous de la face inférieure du bâti inférieur (2).

2. Chariot (1) selon la revendication 1, **caractérisé en ce que** la poignée de commande (20) est une poignée de poussée et de traction qui est mobile de manière linéaire, de préférence dans un plan principal du bâti inférieur (2).

3. Chariot (1) selon la revendication 1 ou 2, **caractérisé en ce que** le mécanisme de pliage (19) comprend un dispositif de transmission de force (22) raccordé à la poignée de commande (20) et aux au moins deux roues arrière (3) respectivement, le dispositif de transmission de force (22) comprenant de préférence des tiges de liaison (23).

4. Chariot (1) selon la revendication 3, **caractérisé en ce que** le mécanisme de pliage (19) comprend des éléments de manchon (24) raccordés aux au moins deux roues arrière (3), les éléments de manchon (24) ayant des premiers rails de guidage (25) pour des éléments de coulissement (31) raccordés aux tiges de liaison (23) pour convertir un actionnement de la poignée de commande (20) en un mouvement de pivotement des au moins deux roues arrière (3).

5. Chariot (1) selon l'une quelconque des revendications 2 à 4, **caractérisé en ce que** la poignée de poussée et de traction est montée sur une tige transversale (26) s'étendant essentiellement perpendiculairement à la direction de la poussée ou de la traction de la poignée de poussée et de traction.

6. Chariot (1) selon l'une quelconque des revendications 1 à 5, **caractérisé en ce que** le mécanisme de pliage (19) comprend un élément intermédiaire (27) agencé entre la poignée de commande (20) et l'au moins une roue avant (4), l'élément intermédiaire (27) ayant de préférence un second rail de guidage (28) pour guider une glissière raccordée à la poignée de commande (20) pour convertir un actionnement de la poignée de commande (20) en un mouvement de pivotement de l'au moins une roue avant (4).

7. Chariot (1) selon l'une quelconque des revendications 2 à 6, **caractérisé en ce que** la poignée de poussée et de traction comprend un élément de prise (29) et un élément de montage (30) monté sur le bâti inférieur (2), l'élément de prise (29) étant monté, de manière pivotante, sur l'élément de montage (30).

8. Chariot (1) selon l'une quelconque des revendications 1 à 7, **caractérisé en ce que** le bâti inférieur (2) comprend deux éléments de bâti latéraux (8) et deux éléments de bâti transversaux (9) raccordant les deux éléments de bâti latéraux (8).

9. Chariot (1) selon l'une quelconque des revendications 1 à 8, **caractérisé en ce que** la poignée de commande (20) est agencée au niveau d'une extrémité avant du bâti inférieur (2), de préférence entre les deux roues avant (4).

10. Chariot (1) selon l'une quelconque des revendications 1 à 9, **caractérisé en ce que** le bâti de support (5) comprend un élément de bâti circonférentiel (10) et au moins un élément de bâti de support (11), l'au moins un élément de bâti de support (11) dans la position de support supportant l'élément de bâti circonférentiel (10) de dessous, l'élément de bâti circonférentiel (10) et l'au moins un élément de bâti de support (11) étant de préférence agencés essentiellement parallèlement à un plan principal du bâti inférieur (2) dans la position repliée du bâti de support (5).

11. Chariot (1) selon la revendication 10, **caractérisé en ce que** le mécanisme de repliage (12) comprend une première charnière (13) entre une première (14) et une seconde partie de bâti (15) de l'élément de bâti circonférentiel (10) et/ou une seconde charnière (16) entre une première (17) et une seconde partie (18) de l'élément de bâti de support (11).

12. Chariot (1) selon l'une quelconque des revendications 1 à 11, **caractérisé en ce que** les au moins deux roues arrière (3) et l'au moins une roue avant (4) sont agencées essentiellement parallèlement à un plan principal du bâti inférieur (2) dans la position rangée.

13. Chariot (1) selon l'une quelconque des revendications 1 à 12, **caractérisé en ce qu'**au moins un élément de pied (21) est monté sur le bâti inférieur (2), en particulier sur un élément de bâti transversal arrière (9) du bâti inférieur (2), pour retenir le chariot (1) dans une position droite, supporté par l'au moins un élément de pied (21).
